# EUROPEAN PATENT SPECIFICATION

(11) **EP 1 903 722 B1**
(45) Date of publication and mention of the grant of the patent: **05.11.2008**
(21) Application number: 06291506.1
(22) Date of filing: 25.09.2006
(51) Int. Cl.: H04L 12/56

(54) **Node structure and method for transporting data in packet-based networks**
Knotenstruktur und Verfahren zum Übertragen von Daten in paketbasierten Netzen
Structure de noeud et procédé de transport de données dans des réseaux à commutation de paquets

(43) Date of publication of application: 26.03.2008
(73) Proprietor: Alcatel Lucent, 75008 Paris (FR)
(72) Inventor: Bunse, Stephan, 70565 Stuttgart (DE); Noirie, Ludovic, 91620 Nozay (FR); Houssin, Jean-Michel, 91400 Saclay (FR)
(74) Representative: Schmidt, Werner Karl

(56) References cited:
- EP-A2- 0 975 187
- WO-A-01/15363
- US-B1- 6 829 247

## Description

### Background of the invention

The present invention relates to a node structure for use in a data transport network, in particular a bus network, for transporting a packet data stream, comprising a plurality of inputs for receiving data packets; a plurality of outputs for outputting data packets; a switching matrix for switchably connecting one of said inputs with one of said outputs; and an add/drop functional element for adding/dropping information to/from the packet data stream, which is included in said switching matrix; and a plurality of interface modules, a respective one of which is connected between each one of said plurality of inputs and said switching matrix, wherein said interface modules are adapted to mark data packets to be dropped from the data stream and wherein said add/drop functional element is adapted to drop data packets based on said marking.

The present invention also relates to a method of transporting data packets in a data transport network, in particular bus network, and to a data transport network comprising a plurality of data busses for transporting packet data.

Generally, the present invention is concerned with multipoint transport networks (MTNs) which are to be used for packet data streams.

The prior art structure of MTN nodes used in current multipoint transport networks is based on the general idea that adding/dropping information to/from a data stream be performed by each one of a plurality of line cards connected between respective inputs and the switching matrix of the node structure. This approach presents some significant disadvantages:

In the prior art approach each line card requires an additional interface for connection with a source/sink for the add/drop traffic, e.g., a routing means such as an (Internet Protocol) router. This additional interface consumes significant space on each line card and therefore entails additional costs.

Since every single line card has a link for add/drop traffic, depending on the amount of traffic added or dropped to/from a given MTN bus said link may not be fully loaded which is a significant drawback in view of the high costs of corresponding line cards in routers and/or switches.

In this context, sharing interfaces from the line cards to the routing means or switches would require additional hardware for separating the received packets from the add/drop line to different MTN busses. Furthermore, if a given MTN bus already demands a substantial part of the capacity of the add/drop port, an increase in packet delivery may effectively inhibited.

Furthermore, in order to allow for full flexibility it may be required that an MTN path has a line card on both sides of the bus. In this way, the above-described cost-intensive packet add/drop functionality would indeed be available twice for a given MTN path, although it is required only once.

Since connectivity between routing means in transport networks has to be maintained (protection), the protecting line must be equipped with an expensive packet add/drop (PAD) line card as well.

EP 0 975 187 A2 discloses a switch having a switch unit and a plurality of input and output line units for connecting the switch to a pluarlity of (voice) data input and output lines. Furthermore, the switch includes a number of voice data processing units. If incoming packet data is voice data and if a particular voice process must be performed, said data are tagged by a corresponding input line unit and then routed by the switch unit in accordance with said tag, i.e., to one of said voice data processing units for performing said voice process. Then the processed voice data is routed to a pre-determined output line (unit) by the switch unit. In this way, said document discloses diverting or re-directing data packets in response to their contents so that data processing may be performed on some of the packets before routing them to a corresponding output, in order to economise data processing means. Such an approach, however, is limited to particular applications in which some of the data to be routed requires data processing prior to routing and some does not.

WO 01/15363 A1 discloses a data network with a plurality of nodes, each node having three interfaces in operative connection with a switching means. One of said interfaces is intended for locally adding/dropping of data packets. Routing of data packets, in particular with respect to local add/drop, is performed based on indicators embedded in a packet overhead section. According to the disclosure of said document, said indicators are embedded into each data packet at the transmitter network node.

US 6,829,247 B1 discloses a method and apparatus for establishing dedicated LANs in an optical network. Every network element or node in said network comprises functionalities which enable inserting/extracting data frames (Ethernet or WAN frames) into/from a previously unused overhead frame of larger payload data packets. To this end, the WAN frames include their respective destination addresses, which are recovered at every node in the network in order to determine whether or not a given WAN frame has to be extracted at that particular node for transferring it to an Ethernet LAN, which is connected to the optical network at that node.

### Object of the invention

It is the object of the present invention to provide a node structure for use in a data transport network as well as a method of transporting data packets in such a network, which do not suffer from the above-described limited flexibility of use and which can be employed in a packet-based data transport network, such as an MTN, for discarding erroneous and/or diverging data packet traffic from the data stream in fast and cost-effective manner.

### Summary of the invention

According to a first aspect of the present invention the object is achieved by providing a node structure of the above-defined type wherein said interface modules are adapted to determine data packet addresses of incoming data packets and to mark data packets for dropping from the packet data stream by means of the add/drop functional element, if a determined packet address is not associated with any one of said plurality of outputs.

According to a second aspect of the present invention the object is achieved by providing a method of transporting data packets in a data transport network, in particular a bus network, comprising the steps of:
- inputting data packets to a switching node of said data transport network via a plurality of inputs;
- transmitting said data packets from said plurality of inputs to a common switching matrix of the switching node;
- prior to transmission to said switching matrix, marking data packets to be switched to at least one dedicated port of said switching matrix for dropping said data packet from the data stream;
- in the switching matrix, analysing at least part of each data packet;
- switching a respective data packet to a dedicated port of said switching matrix for dropping said data packet from the data stream if said analysing step indicates a first condition of said part of the data packet, or transmitting the data packet to one of a plurality of outputs if said analysing step indicates a second condition of said part of the data packet;
further comprising determining data packet addresses of input data packets and marking data packets, a packet address of which is not associated with any one of said plurality of outputs.

According to a third aspect of the present invention, the object is achieved by providing a data transport network of the above-defined type wherein said data busses are interconnected using at least one node structure according to said first aspect of the present invention.

In a general way, the present invention is based on the fact that the main task of an MTN node consists in performing adding and dropping of information (i.e., data packets) which originate from or belong to a data source / data sink (e.g., routing means, IP router) connected to or comprised in said MTN node. There is no technical requirement or necessity that this adding/dropping of information must be done in a certain point of the node. Beside the line cards, the switching matrix is part of the data flow in the node, too. In this way, the inventive idea of performing said information separation in the switching matrix instead of the line card can be regarded as a centralised approach in contrast to the above-described more expensive decentralised solution of the prior art. In accordance with the present invention, only a single specialised line card is required for connection of the routing means with the switching matrix.

In accordance with the present invention the separation of the data streams is prepared by marking data packets to be dropped and thus logically separating them from node transit traffic. This is achieved by connecting a respective interface module (line card) between each one of said plurality of inputs and said switching matrix, wherein said interface module is adapted to mark data packets to be dropped from the data stream and wherein the add/drop functional element is adapted to drop data packets based on said marking. In this way, the add/drop functional element can easily determine whether or not a given data packet has to be dropped without having to analyze or process the entire data packet first.

The interface modules are adapted to determine data packet addresses of incoming data packets and to mark said data packets in response to said determined addresses.

Correspondingly, the method in accordance with the present invention comprises the step of marking data packets to be switched to said dedicated port prior to transmission to said switching matrix.

According to a further embodiment of the method in accordance with the present invention marking said data packets may comprise modifying at least one bit of said data packet, in particular a data packet header bit. However, it will be appreciated by a person skilled in the art, any other way of logically separating add/drop traffic from transit traffic may be alternatively implemented.

In another embodiment of the method in accordance with the present invention the step of determining data packet addresses is performed within the scope of the data busses only. In this way, data packet address determination is limited with respect to a total number of addresses which have to be checked, thus significantly speeding up the procedure. For instance, data bus addresses can be stored in a look-up table, and every data packet the address of which is hot stored in said look-up table is marked and is subsequently dropped from the data stream within the switching matrix. This is equivalent to saying that data packets are marked if the packet address is not associated with anyone of said plurality of outputs, i.e. respective data busses.

In yet another embodiment of the node structure in accordance with the present invention said add/drop functional element is connected with at least one routing means, in particular an IP router, or any other addressable packet data sink. Said connection is provided by means of a special interface card which - in the case of said routing means - must be capable of performing full route look-up in contrast to any other line card used within the node structure of the present invention which only performs route look-up in the scope of the bus, as described above.

Furthermore, in yet another embodiment of the node structure in accordance with the present invention said add/drop functional element is adapted to transmit data packets to be dropped from the packet data stream to said packet data sink and/or to add data packets from said packet data source to the packet data stream through said switching matrix.

Further advantages and characteristics of the present invention can be gathered from the following description of preferred embodiments given by way of example only with reference to the enclosed drawings. Features mentioned above as well as below can be used in accordance with the present invention either individually or in conjunction. The following description of embodiments is not to be regarded as an exhaustive enumeration but rather as providing examples with respect to a general concept underlying the present invention.

### Brief description of the drawings

- Fig. 1: is a schematic diagram of a node structure in accordance with the present invention for use in a data transport network;
- Fig. 2: is a schematic block diagram of a line card for use in the node structure of Fig. 1; and
- Fig. 3: is a flow chart for illustrating an embodiment of the method in accordance with the present invention.

### Detailed description

In the following, preferred embodiments of the present invention will be described with reference to transporting data packets within IP (Internet Protocol) packet data streams. However, the present invention is by no means limited to IP packet data.

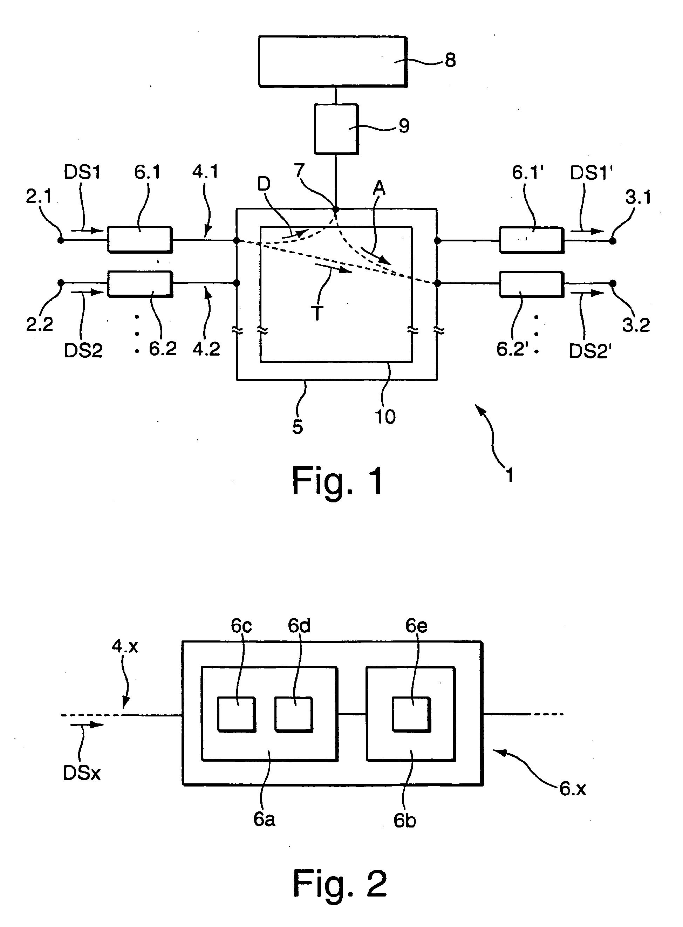

**Fig. 1** shows a schematic diagram of a node structure in accordance with the present invention for use in a data transport network. In Fig. 1, said node structure is generally denoted by means of reference numeral **1**. As will be appreciated by a person skilled in the art, a data transport network (not shown) can be constructed by suitably interconnecting a plurality of node structures 1.

According to the embodiment of Fig. 1, node structure 1 comprises a plurality of inputs **2.1, 2.2**, ... and a plurality of outputs **3.1, 3.2**, ... Inputs 2.1, 2.2, ... and outputs 3.1, 3.2, ... are connected by means of data busses **4.1, 4.2**, ... through switching matrix 5. In this way, data input to node structure 1, e.g., in the form of packet data stream **DS1** through input 2.1, may be transferred as packet data stream **DS2'** to output 3.2 by switchably connecting busses 4.1 and 4.2 through switching matrix 5, as indicated by means of arrow **T** in Fig. 1. This kind of data transmission through switching matrix 5 is also referred to as transfer traffic.

In the same way, data input at input 2.1 (packet data stream DS1) could be transferred to output 3.1 (packet data stream **DS1'**). Furthermore, data input at input 2.2 packet data stream **DS2**) could in principle be transferred either to output 3.1 or output 3.2. However, data packets must not leave a given bus if they are part of it. In other words: The present description considers a packet data stream (which forms a bus) from one input 2.1, 2.2, ... to one (and only one) predetermined output 3.1, 3.2, ... .

As further indicated in Fig. 1, a respective interface module or line card **6.1, 6.2**, ... is connected between each one of said plurality of inputs 2.1, 2.2, ... and switching matrix 5. The functioning of line cards 6.1, 6.2, ... will be explained in detail later.

In addition, switching matrix 5 comprises a dedicated port **7** for connection with a routing device **8** in the form of an IP router via router interface module or router interface card **9**. Said dedicated port 7 of switching matrix 5 need not be hardware defined, i.e., static, but could instead be flexibly defined by suitable configuration means (not shown). Furthermore, more than one such dedicated port 7 and/or more than just one routing device 8 could be provide in connection with switching matrix 5.

Within switching matrix 5, the node structure 1 in accordance with the embodiment of Fig. 1 further comprises an add/drop functional unit **10**, a functioning which will also be described in detail later.

As generally known to a person skilled in the art, data packet streams **DS1, DS2**, ... transmitted on data busses 4.1, 4.2, ... not only comprise transfer traffic data packets (cf. arrow T in Fig. 1) but also data packets which are intended for IP router 8 or any other suitable data sink and therefore have to be dropped at node structure 1 of a respective data transport network. In accordance with the present invention, this is achieved in a centralised fashion by means of the add/drop functional element 10 comprised in switching matrix 5. Add/drop functional element 10 analyses at least part of the individual data packets which are transmitted to switching matrix 5 and switches respective data packets to dedicated port 7 of switching matrix 5 if said analysis indicates that said part of the data packets meets a first condition or criterion. Otherwise, i.e., if said part of the data packet does not meet said first condition or criterion, the respective data packet is treated as transfer traffic T and transmitted to a pre-determined one of said outputs 3.1, 3.2, ..., as previously described. In other words: the output port is defined by the pre-established bus and cannot be chosen by the packet.

In order to reduce the amount of data analysis required within switching matrix 5, line cards 6.1, 6.2, ... are adapted to prepare separation of data streams into transfer traffic T and data packets to be dropped via dedicated port 7.

This aspect of the present invention will now be explained in more detail with reference to appended Fig. 2.

**Fig. 2** shows a schematic block diagram of a line card for use in the node structure of Fig. 1. In Fig. 2, said line card is denoted by means of reference numeral **6.x** (x = 1, 2, ...). According to the embodiment of Fig. 2, line card 6.x comprises data packet processing means **6a** in connection with storing means **6b**. Within data packet processing means 6a line card 6.x comprises analysing means **6c** and marking means **6d.** Storing means 6b are adapted to store address look-up table **6e**.

The functioning of line card 6.x according to Fig. 2 will now be explained in more detail. As previously described in connection with appended Fig. 1, a packet data stream **DSx** arrives at line card 6.x via data bus **4.x**. In contrast to prior art solutions, line card 6.x does not perform any packet add/drop functionality. Instead, analysing means 6c are adapted to perform data packet route look-up within the scope of the bus only. In other words, analysing means 6c determine whether or not a packet address of a given data packet is within an address scope associated with the data busses 4.x (cf. Fig. 1). If this is the case, then said data packet forms part of transit traffic T (Fig. 1). Since packet address look-up is only performed within the scope of the bus, the number of different addresses to be checked by analysing means 6c is limited to a range of a few hundred at the most in contrast to hundreds of thousands of addresses which have to be checked in state of the art Ethernet switches or IP routers. This allows for simplified configuration of line cards 6.x with respect to the prior art in terms of data processing, table storing capability, traffic management , and buffer organisation, thus entailing reduced cost expenditure.

If said packet address is not associated with any one of the data busses 4.x (cf. Fig. 1) but indicates that a respective packet is destined for routing means 8 (Fig. 1), then said data packet is suitably marked for dropping by marking means 6d. Packets with drop addresses outside the scope of the bus indicate a configuration error or a rare transmission error. They should be discarded, too, because otherwise loops may occur in the network with packets travelling around for ever and leading to instabilities. For management purposes, the dropped/discarded packets may be counted by suitable counting means (not shown).

In a preferred embodiment of the present invention, said marking is performed by suitably modifying at least one bit of a data packet header. However, as will be appreciated by a person skilled in the art, any other way of logically separating data packets in terms of transit traffic and data packets to be dropped can be employed within marking means 6d.

The data packets - either marked/modified or unmarked/unmodified - are then transmitted from line card 6.x to switching matrix 5 (Fig. 1). As will be appreciated by a person skilled in the art, line card 6.x of Fig. 2 does not contain any space-consuming and thus expensive interface to IP router 8 (Fig. 1) for packet add/drop as known from prior art architectures.

Referring again to appended Fig. 1, the marked/unmarked data packets are transmitted to switching matrix 5. Within switching matrix 5, add/drop functional element 10 analyses the potentially marked part of the incoming data packets only and simply switches those data packets marked by means of marking means 6d (Fig. 2) to dedicated port 7, i.e., router 8 via router interface card 9. This is indicated by means of arrow **D** in Fig. 1. Furthermore, dedicated port 7 can be used to add data packets originating from router 8 or any other suitable data source to buses 4.1, 4.2, ... through switching matrix 5 as indicated by means of arrow **A** in Fig. 1.

It will be appreciated by a person skilled in the art, router interface card 9 may have similar properties as a normal line card, but handles only the add/drop traffic A, D for all of the data busses 4.x (cf. Fig. 1). The transit traffic T passes router interface card 9 through switching matrix 5, as previously described.

Referring again to appended Fig. 1, in order to provide two-directional transport capability, further line cards **6.1', 6.2'**, ... can be connected between outputs 3.1, 3.2, ... and switching matrix 5 in analogy to previously described line cards 6.1, 6.2. Note that this does not entail any overhead add/drop functionality in contrast to the prior art, since add/drop functional element 10 is present only once in centralised fashion (within switching matrix 5).

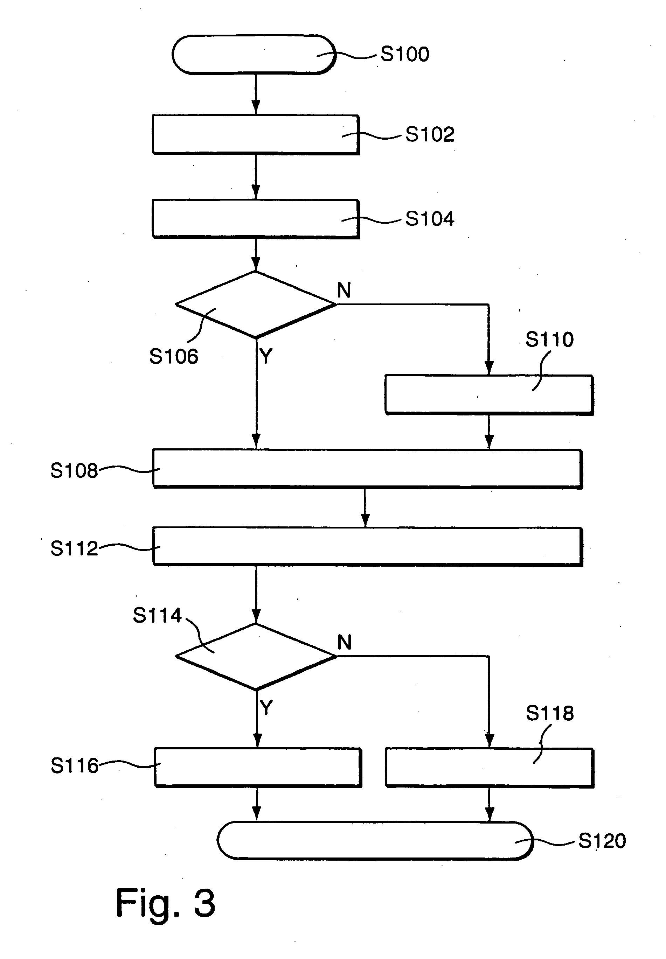

**Fig. 3** shows a flow chart for illustrating an embodiment of the method in accordance with the present invention. The method starts with step **S100.** In subsequent step **S102** a data packet is received by a given line card. In step **S104** said line card performs a packet address look-up for said data packet with addresses in the scope of the bus. In subsequent step **S106** it is decided whether or not said data packet is to be handled as transit traffic T (Fig. 1). If said address is within the scope of the bus and destined for transmission to at least one further node in the transmission network ("y" in step S106), then said packet is transmitted to the switching matrix in step **S108** without any further processing in the line card. Otherwise ("n" in step 106, i.e., data packet either destined for IP router 8 (Fig. 1) or data packet having an address outside scope of the bus), said data packet is marked as to be dropped/discarded from the bus in step **S110**, as previously described. The marked data packets, too, are then transmitted to the switching matrix in step S108.

In subsequent step **S112** at least part of each data packet transmitted to the switching matrix, i.e., that part of each data packet which is susceptible to marking by a line card, is analysed in order to separate add/drop traffic from transit traffic. To this end, in subsequent step **S114** it is decided whether or not a given data packet has been marked in a line card. If the corresponding analysis yields a positive result (packet marked; "y" in step S114) then the switching matrix simply switches said packet to said dedicated port 7 (Fig. 1) for transmission to IP router 8 via router interface card 9, step **S116**. Otherwise (packet not marked; "n" in step S114), said packet is handled as transit traffic, step **S118**, as previously described.

In any case, the inventive method determinates with step **S120**.

In this way, packet add/drop is no longer performed in the line card but in the switching matrix. Within the line cards, data packets are handled and route look-up is performed only within the scope of the bus. No further knowledge is available about the traffic outside the bus. Furthermore, packets to be dropped from the bus are marked by the line cards. The routing means (IP router) is connected with the switching matrix by means of a router interface card. While this card has similar properties as a normal line card, it only handles with the add/drop traffic while transit traffic passes the router interface card via the switching matrix. Time-consuming and resource-demanding full route look-up is performed in the router interface card only.

The proposed structure is therefore more flexible than prior art approaches to multipoint transport networks (MTNs) and thus not requires any special (costly) interface on the line cards. Furthermore, the proposed node structure shows improved compatibility with pure data packet transport as it basically depends on a packet/cell-based matrix rather than on a time division multiplex (TDM)-based matrix as prior art MTN approaches.

As will be appreciated by a person skilled in the art, the present invention may advantageously be implemented in general packet-based transport networks, wherein a data stream from one (input) interface, i.e., interface module or line card, is destined toward one (output) interface, i.e. via a predetermined output port. In this way, busses - as defined in the context of the present document - may effectively be implemented in a more general packed-based transport network.

## Claims

1. A node structure (1) for use in a data transport network for transporting a packet data stream, comprising:
- a plurality of inputs (2.1, 2.2) for receiving data packets;
- a plurality of outputs (3.1, 3.2) for outputting data packets;
- a switching matrix (5) for switchably connecting one of said inputs with one of said outputs;
- an add/drop functional element (10) for adding/dropping data packets to/from the packet data stream, which is included in said switching matrix; and
- a plurality of interface modules (6.1, 6.2), a respective one of which is connected between each one of said plurality of inputs (2.1, 2.2) and said switching matrix (5),
wherein said interface modules are adapted to mark data packets to be dropped from the data stream and wherein said add/drop functional element (10) is adapted to drop data packets based on said marking,
**characterised in that**
said interface modules (6.1, 6.2) are adapted to determine data packet addresses of incoming data packets and to mark data packets for dropping from the packet data stream by means of the add/drop functional element (10), if a determined packet address is not associated with any one of said plurality of outputs (3.1, 3.2).

2. The node structure (1) of claim 1, **characterised in that** said add/drop functional element (10) is connected with at least one packet data sink (8) and/or packet data source (8).

3. The node structure (1) of claim 1, **characterised in that** said at least one packet data sink (8) and/or packet data source (8)is a routing means.

4. The node structure (1) of claim 2, **characterised in that** said add/drop functional element (10) is adapted to transmit data packets to be dropped from the packet data stream to said packet data sink (8) and/or to add data packets from said packet data source (8) to the packet data stream through said switching matrix (5).

5. A method of transporting data packets in a data transport network, comprising the steps of:
- inputting data packets to a switching node (1) of said data transport network via a plurality of inputs (2.1, 2.2);
- transmitting said data packets from said plurality of inputs to a common switching matrix (5) of the switching node;
- prior to transmission to said switching matrix (5), marking data packets to be switched to at least one dedicated port (7) of said switching matrix for dropping said data packet from the data stream
- in the switching matrix, analysing at least part of each data packet;
- switching a respective data packet to said dedicated port (7) if said analysing step indicates a first condition of said part of the data packet, or transmitting the data packet to one of a plurality of outputs (3.1, 3.2) if said analysing step indicates a second condition of said part of the data packet,
**characterised by** the steps of determining data packet addresses of input data packets and marking data packets a packet address of which is not associated with any one of said plurality of outputs (3.1, 3.2).

6. The method of claim 5, **characterised in that** marking said data packets comprises modifying at least one bit of said data packets

7. The method of claim 5, **characterised in that** marking said data packets comprises modifying at least one data packet header bit.

8. Data transport network comprising a plurality of data busses (4.1, 4.2) for transporting packet data, **characterised in that** said data busses are interconnected using at least one node structure (1) according to any one of claims 1 to 4.

## Patentansprüche

1. Eine Knotenstruktur (1) für die Benutzung in einem Datenübertragungsnetz zum Übertragen eines Paketdatenflusses, umfassend:
- eine Vielzahl von Eingängen (2.1, 2.2) zum Empfang von Datenpaketen;
- eine Vielzahl von Ausgängen (3.1, 3.2) für die Ausgabe von Datenpaketen;
- ein Koppelfeld (5) zum schaltbaren Verbinden von einem der besagten Eingänge mit einem der besagten Ausgänge;
- ein Add-Drop-Funktionselement (10) zum Hinzufügen/Entnehmen von Datenpaketen zu/aus dem Paketdatenfluss, welches in dem besagten Koppelfeld enthalten ist; und
- eine Vielzahl von Schnittstellenmodulen (6.1, 6.2), von denen je eines zwischen einem jeden der besagten Vielzahl von Eingängen (2.1, 2.2) und dem besagten Koppelfeld angeschlossen ist,
worin die besagten Schnittstellenmodule fähig sind, Datenpakete, die aus dem Datenfluss entnommen werden sollen, zu markieren, und worin das besagte Add-Drop-Funktionselement (10) fähig ist, Datenpakete auf der Basis der besagten Markierung zu entnehmen,
**dadurch gekennzeichnet, dass**
die besagten Schnittstellenmodule (6.1, 6.2) fähig sind, Datenpaketadressen von eingehenden Datenpaketen zu bestimmen und Datenpakete für die Entnahme aus einem Paketdatenfluss anhand des Add-Drop-Funktionselements (10) zu markieren, wenn eine bestimmte Paketadresse nicht irgendeinem der besagten Vielzahl von Ausgängen (3.1, 3.2) zugeordnet ist.

2. Die Knotenstruktur (1) nach Anspruch 1, **dadurch gekennzeichnet, dass** das besagte Add-Drop-Funktionselement (10) mit mindestens einer Paketdatensenke (5) und/oder Paketdatenquelle (8) verbunden ist.

3. Die Knotenstruktur (1) nach Anspruch 1, **dadurch gekennzeichnet, dass** die besagte mindestens eine Paketdatensenke (8) und/oder Paketdatenquelle (8) ein Routingmittel ist.

4. Die Knotenstruktur (1) nach Anspruch 2, **dadurch gekennzeichnet, dass** das besagte Add-Drop-Funktionselement (10) fähig ist, Datenpakete, die aus dem Paketdatenfluss zu entnehmen sind, an die besagte Paketdatensenke (8) zu übertragen und/oder Datenpakete aus der besagten Paketdatenquelle (8) dem Paketdatenfluss über das besagte Koppelfeld (5) hinzuzufügen.

5. Ein Verfahren zum Übertragen von Datenpaketen in einem Datenübertragungsnetz, welches folgende Schritte umfasst;
- Eingeben von Datenpaketen in einen Vermittlungsknoten (1) des besagten Datenübertragungsnetzes über eine Vielzahl von Eingängen (2.1, 2.2);
- Übertragen der besagten Datenpakete von der besagten Vielzahl von Eingängen an ein gemeinsames Koppelfeld (5) des Vermittlungsknotens;
- Vor dem Übertragen an das besagte Koppelfeld (5), Markieren der Datenpakete, welche an mindestens einen zugeordneten Port (7) des besagten Koppelfeldes vermittelt werden sollen, um das besagte Datenpaket aus dem Datenfluss zu entnehmen;
- Analysieren von mindestens einem Teil eines jeden Datenpakets im Koppelfeld;
- Vermitteln eines entsprechenden Datenpakets an den besagten zugeordneten Port (7), wenn der besagte Analyseschritt einen ersten Zustand des besagten Teils des Datenpakets angibt, oder Übertragen des Datenpakets an einen der Vielzahl von Ausgängen (3.1, 3.2), wenn der besagte Analyseschritt einen zweiten Zustand des besagten Teils des Datenpakets angibt,
**gekennzeichnet durch** die Schritte des Bestimmens von Datenpaketadressen von eingegebenen Datenpaketen und des Markierens von Datenpaketen, von denen eine Paketadresse nicht irgendeinem der Vielzahl von Ausgängen (3.1, 3.2) zugeordnet ist.

6. Das Verfahren nach Anspruch 5, **dadurch gekennzeichnet, dass** das Markieren der besagten Datenpakete das Ändern von mindestens einem Bit des besagten Datenpakets umfasst.

7. Das Verfahren nach Anspruch 5, **dadurch gekennzeichnet, dass** das Markieren der besagten Datenpakete das Ändern von mindestens einem Datenpaket-Headerbit umfasst.

8. Datenübertragungsnetz mit einer Vielzahl von Datenbussen (4.1, 4.2) zum Übertragen von Paketdaten, **dadurch gekennzeichnet, dass** die besagten Datenbusse miteinander verbunden sind und mindesten eine Knotenstruktur (1) gemäß einem beliebigen der Ansprüche 1 bis 4 benutzen.

## Revendications

1. Structure de noeud (1) destinée à être utilisée dans un réseau de transport de données pour transporter un flot de données de paquets, comprenant :
- une pluralité d'entrées (2.1, 2.2) permettant de recevoir des paquets de données ;
- une pluralité de sorties (3.1, 3.2) permettant de fournir des paquets de données ;
- une matrice de commutation (5) permettant de connecter par commutation une desdits entrées avec une desdites sorties ;
- un élément fonctionnel d'insertion-extraction (10) permettant d'insérer/extraire des paquets de données dans/du flot de données de paquets, qui est inclus dans ladite matrice de commutation; et
- une pluralité de modules d'interface (6.1, 6.2), dont un module respectif est connecté entre chaque entrée de ladite pluralité d'entrées (2.1, 2.2) et ladite matrice de commutation (5),
dans lequel lesdits modules d'interface sont adaptés pour marquer les paquets de données à extraire du flot de données et dans lequel ledit élément fonctionnel d'insertion-extraction (10) est adapté pour extraire les paquets de données sur la base dudit marquage,
**caractérisée en ce que**
lesdits modules d'interface (6.1, 6.2) sont adaptés pour déterminer les adresses de paquets de données des paquets de données entrants et pour marquer les paquets de données à extraire du flot de données de paquets au moyen de l'élément fonctionnel d'insertion-extraction (10), si une adresse de paquet déterminée n'est pas associée à une quelconque sortie de ladite pluralité de sorties (3.1, 3.2).

2. Structure de noeud (1) selon la revendication 1, **caractérisée en ce que** ledit élément fonctionnel d'insertion-extraction (10) est connecté à au moins un collecteur de données de paquets (8) et/ou une source de données de paquets (8).

3. Structure de noeud (1) selon la revendication 1, **caractérisée en ce que** au moins un collecteur de données de paquets (8) et/ou une source de données de paquets (8) est un moyen de routage.

4. Structure de noeud (1) selon la revendication 2, **caractérisée en ce que** ledit élément fonctionnel d'insertion-extraction (10) est adapté pour transmettre les paquets de données à extraire du flot de données de paquets audit collecteur de données de paquets (8) et/ou pour insérer les paquets de données provenant de ladite source de paquets de données (8) dans le flot de données de paquets par l'intermédiaire de ladite matrice de commutation (5).

5. Procédé permettant de transporter des paquets de données dans un réseau de transport de données, comprenant les étapes suivantes :
- entrer les paquets de données dans un noeud de commutation (1) dudit réseau de transport de données via une pluralité d'entrées (2.1, 2.2) ;
- transmettre lesdits paquets de données de ladite pluralité d'entrées à une matrice de commutation commune (5) du noeud de commutation ;
- avant la transmission à ladite matrice de commutation (5), marquer les paquets de données à commuter au moins un orifice dédié (7) de ladite matrice de commutation pour extraire lesdits paquets de données du flot de données ;
- dans la matrice de commutation, analyser au moins une partie de chaque paquet de données ;
- commuter un paquet de données respectif audit port dédié (7) si ladite étape d'analyse indique un premier état de ladite partie du paquet de données, ou transmettre le paquet de données à une sortie d'une pluralité de sorties (3.1, 3.2) si ladite étape d'analyse indique un second état de ladite partie du paquet de données,
**caractérisé par** les étapes consistant à déterminer les adresses de paquets de données des paquets de données d'entrée et marquer les paquets de données, dont une adresse de paquet n'est pas associée à une quelconque sortie de ladite pluralité de sorties (3.1, 3.2).

6. Procédé selon la revendication 5, **caractérisé en ce que** le marquage desdits paquets de données comprend la modification d'au moins un bit desdits paquets de données.

7. Procédé selon la revendication 5, **caractérisé en ce que** le marquage desdits paquets de données comprend la modification d'au moins un bit d'en-tête de paquet de données.

8. Réseau de transport de données comprenant une pluralité de bus de données (4.1, 4.2) pour transporter les données de paquets, **caractérisé en ce que** lesdits bus de données sont interconnectés en utilisant au moins une structure de noeud (1) selon l'une quelconque des revendications 1 à 4.
